# FASCICULE DE BREVET EUROPEEN

(11) **EP 3 866 725 B1**
(45) Date de publication et mention de la délivrance du brevet: **26.04.2023**
(21) Numéro de dépôt: 19816826.2
(22) Date de dépôt: 10.10.2019
(51) Int. Cl.: A61C 7/08

(54) **DISPOSITIF DE POSITIONNEMENT RELATIF DES MÂCHOIRES INFÉRIEURE ET SUPÉRIEURE D'UN SUJET**
VORRICHTUNG ZUR RELATIVEN POSITIONIERUNG VON OBER- UND UNTERKIEFER EINES PATIENTEN
DEVICE FOR THE RELATIVE POSITIONING OF THE UPPER AND LOWER JAWS OF A SUBJECT

(30) Priorité: 15.10.2018 FR 1871181
(43) Date de publication de la demande: 25.08.2021
(73) Titulaire: Oniris, 92500 Rueil-Malmaison (FR)
(72) Inventeur: VINCENT, Thibault, 78800 Houilles (FR)
(74) Mandataire: Fédit-Loriot
(86) Numéro de dépôt international: PCT/FR2019/052413
(87) Numéro de publication internationale: WO 2020/079353

(56) Documents cités:
- US-A1- 2013 220 341
- US-A1- 2017 172 785
- US-A1- 2018 140 385

## Description

L'invention a pour objet un dispositif de positionnement relatif des mâchoires inférieure et supérieure d'un sujet, comprenant des gouttières destinées à être disposées sur les arcades dentaires des mâchoires inférieure et supérieure du sujet et reliées par des organes de liaison disposés en position occlusale, entre les gouttières, chaque organe de liaison comportant des parties d'extrémité postérieure et antérieure destinées à être articulées sur une face occlusale respective des gouttières supérieure et inférieure, de manière à solliciter ladite gouttière inférieure vers une direction avant.

Un tel dispositif est bien connu de l'homme du métier, notamment par l'exemple qu'en donne le document EP 1 658 823. Ce document fait connaître un appareil dentaire du type décrit ci-dessus, dans lequel les organes de liaison sont constitués par des lames minces élastiques et flexibles montées en position occlusale entre les gouttières et reliées aux gouttières par des articulations comprenant des pivots ancrés partiellement dans les gouttières, d'axe perpendiculaire au plan occlusal des arcades dentaires du sujet, dont des parties saillantes sont destinées à s'engager dans des ouvertures agencées aux extrémités respectives des lames minces et sont bloquées par des clips. Plus précisément, les lames présentent chacune une ouverture antérieure montée dans un pivot solidaire de la gouttière supérieure au voisinage de son extrémité avant et une ouverture postérieure montée dans un pivot solidaire de la gouttière inférieure au voisinage de son extrémité arrière.

Ainsi, l'appareil une fois mis en place provoque un effort de traction permanent sur la mâchoire inférieure par rapport à la mâchoire supérieure. Autrement dit, les lames minces élastiques et flexibles ne travaillent qu'en traction.

La configuration en traction présente le désavantage majeur de maintenir la bouche de l'utilisateur fermée lors de la propulsion. Cela peut entraîner un inconfort chez certaines personnes et limite les possibilités d'avancée de la mâchoire, donc l'efficacité du traitement. En réalité, selon le document précité, seule une possibilité limitée d'ouverture de la bouche est possible, du fait de la possibilité de déformation en flexion des lames minces positionnées entre les gouttières. Mais, pendant le sommeil, les mouvements d'ouverture buccale sont nombreux et en particulier en cas de ronflement et d'apnée du sommeil. Lorsque la force d'ouverture est supérieure à la rétention des gouttières sur les dents, cela provoque le désengagement des gouttières et l'inefficacité du traitement. Il serait donc souhaitable de disposer d'un tel appareil permettant la mise en place, en face occlusale des gouttières, d'organes de liaison susceptibles de travailler, non pas en traction, mais en propulsion.

De plus, selon le document précité, il faut prévoir un jeu de plusieurs paires de lames minces de différentes longueurs, disposées en position occlusale de la paire de gouttières, de façon à permettre un ajustement progressif de l'appareil et pour pouvoir suivre petit à petit la différence d'avancée entre les mâchoires inférieure et supérieure. En effet, l'avancée progressive de la mâchoire inférieure est effectuée en jouant sur la longueur des lames minces, en sélectionnant des lames minces de longueur de plus en plus grande. Ce mode opératoire a l'inconvénient de nécessiter de multiples opérations de montage et de démontage des lames minces pour leur substitution par une autre paire de lames minces du jeu au fur et à mesure de l'avancement du traitement, avec des risques de casse au niveau des articulations des lames minces ou de perte des clips maintenant en place les lames minces. Il complexifie également la gestion de la chaîne d'approvisionnement de ce type d'appareil, qui doit être livré en kit comportant un jeu de paires de lames minces de longueurs différentes pour permettre l'ajustement progressif de l'appareil. [ A ]

Dans ce contexte, la présente invention a pour but de proposer un dispositif de positionnement relatif des mâchoires inférieure et supérieure d'un sujet, qui soit exempt de l'une au moins des limitations précédemment évoquées.

A cette fin, le dispositif de l'invention, par ailleurs conforme à la définition générique qu'en donne le préambule ci-dessus, est essentiellement caractérisé en ce que chaque organe de liaison est constitué d'une biellette rigide de longueur fixe dont la partie d'extrémité postérieure est sur la gouttière supérieure et en ce que la position de la partie d'extrémité postérieure de chaque biellette rigide est réglable longitudinalement dans le plan occlusal de manière à ajuster la position de la gouttière inférieure.

Aussi, grâce à cet agencement, le dispositif est particulièrement bien adapté pour une action des biellettes en propulsion et il n'y nul besoin d'un jeu de biellettes de différentes tailles pour permettre de régler l'avancement de la
A : Il est également connu du document US2013/0220341 A1, des biellettes dont la partie d'extrémité postérieure est montée latéralement sur la gouttière supérieure. mâchoire inférieure. Au contraire, ce réglage peut être effectué selon la présente invention avec une unique paire de biellettes de longueur fixe, en réglant simplement la position de la partie d'extrémité postérieure de la biellette sur la gouttière supérieure, selon une direction longitudinale dans le plan occlusal. Par réglable longitudinalement dans le plan occlusal, on entend que la position de la partie d'extrémité postérieure de chaque biellette destinée à être rendue solidaire de la gouttière supérieure, peut être déplacée selon une direction postéro-antérieure (d'arrière en avant) et antéro-postérieure (d'avant en arrière).

Ladite partie d'extrémité postérieure comporte une tête montée mobile en translation dans un rail de guidage longitudinal ancré partiellement en face occlusale de la gouttière supérieure, jusqu'à venir en contact contre une butée de réglage logée à l'intérieur dudit rail de guidage, de sorte que la position de ladite partie d'extrémité postérieure dans ledit rail de guidage est réglable en fonction de la position de ladite butée de réglage.

Avantageusement, ledit rail de guidage comporte une vis de réglage engagée dans un alésage fileté axial formé à une extrémité postérieure dudit rail de guidage, l'extrémité antérieure de ladite vis de réglage constituant ladite butée de réglage pour ladite partie d'extrémité postérieure de ladite biellette montée dans ledit rail de guidage.

De préférence, ledit rail de guidage s'étend sur une longueur sensiblement à l'aplomb de la face occlusale des molaires.

Avantageusement, la gouttière inférieure comporte un évidement formé dans ladite face occlusale de ladite gouttière inférieure, de forme complémentaire à celle dudit rail de guidage et destiné à recevoir une partie saillante dudit rail de guidage.

De préférence, ladite tête de ladite partie d'extrémité postérieure de ladite biellette est en forme de rotule.

Avantageusement, ladite partie d'extrémité antérieure des biellettes comporte un organe de fixation articulée amovible sur un dispositif d'attache disposé en face occlusale de la gouttière inférieure.

De préférence, ledit dispositif d'attache est monté dans un logement creux formé dans le corps de la gouttière inférieure sans faire saillie de ladite face occlusale.

De préférence, ledit organe de fixation articulée amovible comporte un élément femelle et ledit dispositif d'attache constitue un élément mâle à pivot.

Avantageusement, ledit élément mâle à pivot comporte un axe de pivotement agencé transversalement dans ledit logement creux et ledit élément femelle présente un profil circulaire ouvert sur une section permettant un encliquetage élastique dudit profil circulaire sur ledit axe de pivotement transversal, la section ouverte de l'élément femelle étant positionnée dans l'axe de la biellette.

L'invention est maintenant décrite en référence aux dessins annexés, non limitatifs, dans lesquels :
[Fig. 1] représente une vue en perspective de face du dispositif conforme à l'invention,
[Fig. 2] représente une vue en perspective de côté du dispositif conforme à l'invention, et
[Fig. 3] représente une vue en perspective par l'arrière du dispositif conforme à l'invention.

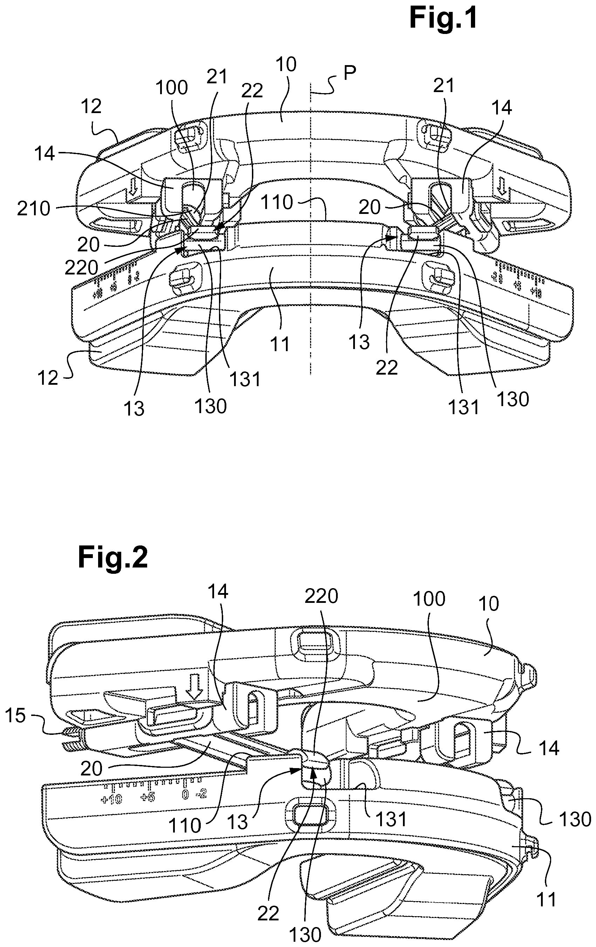

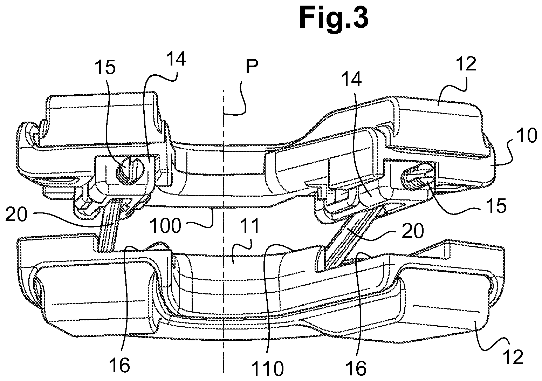

Le dispositif 1 comprend deux gouttières respectivement supérieure et inférieure, représentées schématiquement sur les figures 1 à 3. La gouttière 10 de l'arcade dentaire de la mâchoire supérieure (ou maxillaire), dite gouttière supérieure, est située au-dessus de la gouttière 11 de l'arcade dentaire de la mâchoire inférieure (ou mandibule), dite gouttière inférieure. Les deux gouttières supérieure et inférieure 10 e 11 ont sensiblement une forme de canal creux en U et sont symétriques par rapport au plan sagittal médian P du sujet. Le plan d'extension et de contact des gouttières, défini entre les gouttières supérieure 10 et inférieure 11 est défini comme étant le plan occlusal, soit un plan transversal orthogonal au plan P. La gouttière inférieure 11 est représentée ici en position avancée par rapport à la gouttière supérieure 10. Les gouttières sont réalisées par moulage d'une matière thermoplastique.

Les deux gouttières 10 et 11 sont destinées à accueillir dans leur canal un matériau thermoformable 12 prenant l'empreinte des dents, par exemple en EVA (éthylène-acétate de vinyle).

Dans cette position avancée de la gouttière inférieure 11, les deux gouttières supérieure et inférieure 10 et 11 sont reliées par deux biellettes 20, montées en position occlusale, entre les gouttières 10 et 11, chaque biellette 20 comportant des parties d'extrémité postérieure 21 et antérieure 22, rendues solidaires et articulées sur une face occlusale 100, 110 respectivement de la gouttière supérieure 10 et de la gouttière inférieure 11. La face occlusale des gouttières est la face de ces gouttières qui est orientée en regard du plan occlusal. Chaque biellette 20 s'étend ainsi dans un espace délimité par les faces occlusales des gouttières supérieure 10 et inférieure 11.

La partie d'extrémité postérieure 21 de chaque biellette 20 est fixée articulée en partie postérieure sur la gouttière supérieure 10 et la partie d'extrémité antérieure 22 de chaque biellette 20 est fixée articulée en partie antérieure sur la gouttière inférieure 11, le montage des biellettes se faisant alors en propulsion.

Les biellettes 20 sont préférentiellement réalisées en matière plastique rigide ou semi-rigide moulée.

La face occlusale 110 de la gouttière inférieure 11 est pourvue d'un dispositif d'attache 13, agencé en partie antérieure de la gouttière inférieure 11, de part et d'autre du plan sagittal médian P, sur lequel la partie d'extrémité antérieure 22 de chaque biellette 20 est fixée articulée de façon amovible.

Selon le mode de réalisation illustré sur les figures, chaque dispositif d'attache antérieure 13 comporte un pivot sous forme d'un axe cylindrique mâle 130 agencé transversalement, soit perpendiculairement au plan médian P, dans un logement creux 131 formé en partie antérieure dans le corps de la gouttière inférieure 11. Préférentiellement, l'axe de pivotement 130 est agencé entre deux parois opposées du logement creux 131 de façon sensiblement affleurante à une surface supérieure de la face occlusale 110 de gouttière inférieure 11. Le dispositif d'attache 13 de la partie d'extrémité antérieure 22 de chaque biellette 20 est ainsi monté dans le logement creux 31 de ladite face occlusale, sans faire saillie, de manière à minimiser l'ouverture buccale en propulsion.

Selon ce mode de réalisation, la partie d'extrémité antérieure 22 de chaque biellette 20 comporte un élément femelle, destiné à coopérer avec l'axe de pivotement 130 du dispositif d'attache antérieur 13 de la gouttière inférieure 11. Cet élément femelle de type à anneau ouvert 220 présente un profil circulaire ouvert sur une section dimensionnée de façon à permettre un encliquetage élastique de la partie d'extrémité antérieure 22 de la biellette sur l'axe de pivotement transversal 130. La section ouverte de l'élément femelle en anneau ouvert 220 est positionnée dans l'axe de la biellette 20, de sorte que lors de l'action en propulsion de la biellette, la partie fermée de l'anneau ouvert s'oppose efficacement aux forces de recul de la mâchoire inférieure.

La partie d'extrémité antérieure 22 de la biellette 20 pourrait comprendre d'autres types de profils mâles ou femelles, destinés à s'engager élastiquement dans un profil complémentaire formé au niveau du dispositif d'attache 13, pour réaliser l'encliquetage élastique de la partie d'extrémité antérieure de la biellette en partie antérieure de la gouttière inférieure. Ainsi, un tel profil pourrait comprendre en alternative une rotule s'engageant élastiquement dans une contre-rotule formée au niveau du dispositif d'attache 13.

Selon le mode de réalisation illustré sur les figures, l'anneau ouvert 220 peut présenter une dimension axiale (qui s'étend transversalement au plan médian P) légèrement inférieure à la longueur de l'axe de pivotement 130 s'étendant dans le logement creux 131, de façon à permettre un certain débattement latéral de la mâchoire inférieure. En ajustant le jeu entre ces éléments assurant la liaison entre la biellette 20 et la gouttière en partie antérieure de celle-ci, il est possible de régler le débattement latéral autorisé de la biellette. On peut choisir d'avoir un certain jeu latéral, mais on peut aussi choisir de supprimer ce jeu par un ajustement serré de l'anneau ouvert entre les deux parois opposées du logement creux 131 entre lesquelles s'étend transversalement l'axe de pivotement 130, de sorte que seul un mouvement de pivotement autour de l'axe du pivotement est autorisé, sans débattement latéral.

La gouttière supérieure 10 est pourvue, en sa partie postérieure, de deux rails de guidage longitudinal 14 qui sont ancrés partiellement en face occlusale 100 de la gouttière supérieure 10 et qui sont disposés symétriquement de part et d'autre du plan médian P.

Chaque rail de guidage 14 s'étend préférentiellement sur une longueur sensiblement à l'aplomb de la face occlusale des molaires du sujet, lorsque la gouttière supérieure 10 est portée. Chaque rail de guidage 14 est intégré ou fixé à la gouttière supérieure 10.

On prévoit que la gouttière inférieure 11 comporte un évidement 16, formé dans sa face occlusale, de forme complémentaire à celle du rail de guidage 14 fixé en face occlusale de la gouttière supérieure 10. Cet évidement permet de recevoir la partie saillante du rail de guidage 14, de manière à minimiser l'ouverture buccale en propulsion. Le prolongement de cet évidement vers l'avant peut constituer le logement creux 131 dans lequel est agencé le dispositif d'attache antérieur 13 de la gouttière inférieure.

Chaque rail de guidage 14 comporte une gorge longitudinale adaptée pour permettre de recevoir une tête 210 de la partie d'extrémité postérieure 21 d'une biellette 20, préférentiellement en forme de rotule, de sorte que cette partie d'extrémité postérieure 21 y est reliée avec un degré de liberté en translation dans les directions postéro-antérieure et antéro-postérieure, qu'une butée de réglage mobile vient limiter du côté postérieur de la course de guidage définie par le rail de guidage 14. La force de retour exercée par la mâchoire inférieure met la biellette en compression et maintient celle-ci engagée dans la gorge du rail de guidage contre la butée de réglage mobile disposée dans le rail.

La tête de la partie d'extrémité postérieure 21 est donc montée mobile en translation dans le rail de guidage 14, jusqu'à venir en contact contre la butée de réglage mobile logée à l'intérieur du rail de guidage, de sorte que la position de la partie d'extrémité postérieure 21 de la biellette dans le rail de guidage 14 est réglable en fonction de la position de la butée de réglage.

Cette butée est constituée par une vis de réglage 15 engagée dans un alésage fileté axial formé à une extrémité postérieure du rail de guidage 14. Plus précisément, l'extrémité axiale antérieure (non visible sur les figures) de cette vis de réglage 15, disposée à l'intérieur du rail de guidage 14, présente une surface de contact radiale qui constitue la butée de réglage pour la partie d'extrémité postérieure 21 de la biellette montée dans le rail de guidage 14. L'extrémité axiale postérieure de la vis de réglage 15 débouche quant à elle à l'arrière de l'extrémité postérieure du rail de guidage 14 et est adaptée pour coopérer avec un outil permettant d'entraîner la vis de réglage 15 en rotation pour son vissage ou son dévissage dans le rail de guidage. Ainsi, en vissant ou dévissant cette vis de réglage 15, la position de son extrémité antérieure formant butée pour la partie d'extrémité postérieure 21 de la biellette, peut être respectivement avancée ou reculée dans le rail de guidage 14. Par conséquent la position de la partie d'extrémité postérieure 21 de la biellette qui est mise en en compression contre la butée sous l'effet de la force de retour exercée par la mâchoire inférieure, peut être ajustée grâce à la vis de réglage 15. Ainsi, dans le cadre d'un traitement de problèmes d'apnée du sommeil ou de ronflement, le dispositif de l'invention permet de soumettre la mâchoire inférieure du sujet à un mouvement d'avancée incrémentale en vissant petit à petit la vis de réglage 15 de manière à décaler vers l'avant la position de la partie d'extrémité postérieure 21 de la biellette à chaque phase d'exécution du traitement, jusqu'à ce qu'on constate la fin des problèmes. Grâce à la possibilité de modifier la position de la partie d'extrémité postérieure 21 de la biellette, ce réglage peut être réalisé avec un seul et même jeu de biellettes de longueur fixe.

Le dispositif de l'invention peut avantageusement comprendre un jeu de vis de réglage 15 comprenant une pluralité, en particulier au moins deux, vis de réglage de longueurs différentes. En effet, lorsque le décalage de la mâchoire inférieure vers l'avant de la mâchoire supérieure doit être faible ou peu prononcé, il est nécessaire de régler la position de la partie d'extrémité postérieure des biellettes plutôt en arrière du rail de guidage, tandis qu'à l'inverse, lorsque ce décalage de la mâchoire inférieure vers l'avant de la mâchoire supérieure doit être important, il est nécessaire de régler la position de la partie d'extrémité postérieure des biellettes vers l'avant du rail de guidage. L'emploi d'une seule longueur de vis adaptée pour régler ces différentes positions implique, dans le premier cas de figure évoqué, qu'une partie substantielle de la vis de réglage débouche axialement à l'extérieur du rail de guidage au risque de constituer une gêne pour le sujet. Aussi, pour y pallier, on prévoit préférentiellement au moins une première vis de réglage d'une première longueur, adaptée à régler la position de la butée plutôt en partie arrière du rail de guidage avec une portion débouchante du rail relativement faible et une deuxième vis de réglage d'une deuxième longueur, plus grande, adaptée à régler la position de la butée plutôt en partie avant du rail de guidage, toujours avec une portion débouchante du rail relativement faible, et qui est donc adaptée aux décalages plus important de la mâchoire inférieure vers l'avant. Autrement dit, on prévoit une première vis de réglage dont la longueur est adaptée aux réglages des faibles décalages de la mâchoire inférieure vers l'avant et une deuxième vis de réglage dont la longueur est adaptée aux réglages de décalages plus importants de la mâchoire inférieure vers l'avant.

En outre, on relèvera que ce système de réglage à vis permet d'obtenir une précision élevée du réglage du degré d'avancement de la mâchoire inférieure, qui est fonction du filetage de la vis de réglage. La précision et la finesse du réglage procurées par ce système est bien supérieure au système classique de réglage de l'art antérieur, qui repose sur le changement de la taille des biellettes utilisées, permettant généralement un réglage par pas de 1 mm.

A titre d'exemple, selon la présente invention, avec un seul et même jeu de biellettes de taille fixe et deux longueurs différentes de vis de réglage, on peut couvrir environ 12 mm d'amplitude de réglage. Pour obtenir le même résultat avec des biellettes dont la taille varie par pas de 1mm, il faudrait 12 jeux de biellettes de taille différentes et encore bien davantage si une précision de réglage plus importante, soit avec un pas de réglage inférieur, était requise.

## Revendications

1. Dispositif (1) de positionnement relatif des mâchoires inférieure et supérieure d'un sujet, comprenant des gouttières (10, 11) destinées à être disposées sur les arcades dentaires des mâchoires inférieure et supérieure du sujet et reliées par des organes de liaison (20) disposés en position occlusale, entre les gouttières, chaque organe de liaison comportant des parties d'extrémité postérieure (21) et antérieure (22) rendues solidaires et articulées sur une face occlusale respective (100, 110) des gouttières supérieure et inférieure, de manière à solliciter ladite gouttière inférieure vers une direction avant,
tel que chaque organe de liaison (20) est constitué d'une biellette rigide de longueur fixe dont la partie d'extrémité postérieure (21) est sur la gouttière supérieure (10), ladite partie d'extrémité postérieure (21) comportant une tête (210) montée mobile en translation dans un rail de guidage longitudinal (14) ancré partiellement en face occlusale (100) de la gouttière supérieure (10), jusqu'à venir en contact contre une butée de réglage (15) logée à l'intérieur dudit rail de guidage, de sorte que la position de ladite partie d'extrémité postérieure (21) dans ledit rail de guidage est réglable en fonction de la position de ladite butée de réglage, par quoi la position de la partie d'extrémité postérieure (21) de chaque biellette rigide est réglable longitudinalement dans le plan occlusal de manière à ajuster la position de la gouttière inférieure (11).

2. Dispositif selon la revendication 1, **caractérisé en ce que** ledit rail de guidage (14) comporte une vis de réglage (15) engagée dans un alésage fileté axial formé à une extrémité postérieure dudit rail de guidage, l'extrémité antérieure de ladite vis de réglage (15) constituant ladite butée de réglage pour ladite partie d'extrémité postérieure (21) de ladite biellette (20) montée dans ledit rail de guidage.

3. Dispositif selon la revendication 2, **caractérisé en ce que** le dispositif comprend un jeu de vis de réglage comprenant au moins deux vis de réglage de longueurs différentes.

4. Dispositif selon l'une quelconque des revendications 1 à 3, **caractérisé en ce que** ledit rail de guidage (14) s'étend sur une longueur sensiblement à l'aplomb de la face occlusale des molaires.

5. Dispositif selon l'une quelconque des revendications 1 à 4, **caractérisé en ce que** la gouttière inférieure (11) comporte un évidement formé dans ladite face occlusale de ladite gouttière inférieure, de forme complémentaire à celle dudit rail de guidage (14) et destiné à recevoir une partie saillante dudit rail de guidage.

6. Dispositif selon l'une quelconque des revendications 1 à 5, **caractérisé en ce que** ladite tête (210) de ladite partie d'extrémité postérieure (21) de ladite biellette est en forme de rotule.

7. Dispositif selon l'une quelconque des revendications précédentes, **caractérisé en ce que** ladite partie d'extrémité antérieure (22) des biellettes (20) comporte un organe de fixation articulée amovible (220) sur un dispositif d'attache (13) disposé en face occlusale de la gouttière inférieure (11).

8. Dispositif selon la revendication 7, **caractérisé en ce que** ledit dispositif d'attache (13) est monté dans un logement creux (131) formé dans le corps de la gouttière inférieure (11) sans faire saillie de ladite face occlusale.

9. Dispositif selon la revendication 7 ou 8, **caractérisé en ce que** ledit organe de fixation articulée amovible (220) comporte un élément femelle et ledit dispositif d'attache (13) constitue un élément mâle à pivot (130).

10. Dispositif selon les revendications 8 et 9, **caractérisé en ce que** ledit élément mâle à pivot (130) comporte un axe de pivotement agencé transversalement dans ledit logement creux (131) et ledit élément femelle (220) présente un profil circulaire ouvert sur une section permettant un encliquetage élastique dudit profil circulaire sur ledit axe de pivotement transversal, la section ouverte de l'élément femelle étant positionnée dans l'axe de la biellette (20).

## Patentansprüche

1. Vorrichtung (1) zur relativen Positionierung des Unter- und Oberkiefers einer Person, umfassend Schienen (10, 11), die dazu vorgesehen sind, an den Zahnbögen des Unter- und Oberkiefers der Person angeordnet zu werden, und die durch Verbindungselemente (20) verbunden sind, die in der okklusalen Position zwischen den Schienen angeordnet sind, wobei jedes Verbindungselement einen hinteren (21) und einen vorderen (22) Endabschnitt umfasst, die fest mit einer jeweiligen Okklusionsfläche (100, 110) der oberen und der unteren Schiene verbunden und an dieser derart angelenkt sind, dass die untere Schiene in eine Vorwärtsrichtung belastet wird,
wobei jedes Verbindungselement (20) aus einem starren Glied mit fester Länge besteht, dessen hinterer Endabschnitt (21) sich auf der oberen Schiene (10) befindet, wobei der hintere Endabschnitt (21) einen Kopf (210) umfasst, der translatorisch beweglich in einer Längsführungsschiene (14) montiert ist, die teilweise in der Okklusionsfläche (100) der oberen Schiene (10) verankert ist, bis er mit einem Einstellanschlag (15) in Kontakt kommt, der in der Führungsschiene untergebracht ist, so dass die Position des hinteren Endabschnitts (21) in der Führungsschiene in Abhängigkeit von der Position des Einstellanschlags einstellbar ist, wodurch die Position des hinteren Endabschnitts (21) jedes starren Glieds in der Okklusionsebene in Längsrichtung einstellbar ist, um die Position der unteren Schiene (11) zu justieren.

2. Vorrichtung nach Anspruch 1, **dadurch gekennzeichnet, dass** die Führungsschiene (14) eine Einstellschraube (15) umfasst, die in eine axiale Gewindebohrung eingreift, die an einem hinteren Ende der Führungsschiene ausgebildet ist, wobei das vordere Ende der Einstellschraube (15) den Einstellanschlag für den hinteren Endabschnitt (21) des Glieds (20) ausbildet, der in der Führungsschiene montiert ist.

3. Vorrichtung nach Anspruch 2, **dadurch gekennzeichnet, dass** die Vorrichtung einen Satz von Einstellschrauben umfasst, der mindestens zwei Einstellschrauben mit unterschiedlicher Länge umfasst.

4. Vorrichtung nach einem der Ansprüche 1 bis 3, **dadurch gekennzeichnet, dass** die Führungsschiene (14) sich über eine Länge erstreckt, die im Wesentlichen senkrecht zur Okklusionsfläche der Backenzähne verläuft.

5. Vorrichtung nach einem der Ansprüche 1 bis 4, **dadurch gekennzeichnet, dass** die untere Schiene (11) eine Aussparung umfasst, die in der Okklusionsfläche der unteren Schiene in komplementärer Form zu jener der Führungsschiene (14) ausgebildet und dazu vorgesehen ist, einen vorstehenden Abschnitt der Führungsschiene aufzunehmen.

6. Vorrichtung nach einem der Ansprüche 1 bis 5, **dadurch gekennzeichnet, dass** der Kopf (210) des hinteren Endabschnitts (21) des Glieds in Form einer Kugel ausgebildet ist.

7. Vorrichtung nach einem der vorhergehenden Ansprüche, **dadurch gekennzeichnet, dass** der vordere Endabschnitt (22) der Glieder (20) ein entfernbares gelenkiges Befestigungselement (220) an einer Befestigungsvorrichtung (13) umfasst, die auf der Okklusionsfläche der unteren Schiene (11) angeordnet ist.

8. Vorrichtung nach Anspruch 7, **dadurch gekennzeichnet, dass** die Befestigungsvorrichtung (13) in einem hohlen Gehäuse (131) montiert ist, das im Körper der unteren Schiene (11) ausgebildet ist, ohne von der Okklusionsfläche vorzuragen.

9. Vorrichtung nach Anspruch 7 oder 8, **dadurch gekennzeichnet, dass** das entfernbare gelenkige Befestigungselement (220) ein weibliches Element aufweist und die Befestigungsvorrichtung (13) ein männliches Schwenkelement (130) bildet.

10. Vorrichtung nach den Ansprüchen 8 und 9, **dadurch gekennzeichnet, dass** das männliche Schwenkelement (130) eine Schwenkachse umfasst, die quer in dem hohlen Gehäuse (131) angeordnet ist, und das weibliche Element (220) ein kreisförmiges Profil hat, das an einem Teil offen ist, der einen elastischen Schnappverschluss des kreisförmigen Profils auf der quer verlaufenden Schwenkachse ermöglicht, wobei der offene Teil des weiblichen Elements in der Achse des Glieds (20) positioniert ist.

## Claims

1. A device (1) for relatively positioning lower and upper jaws of a subject, comprising cap splints (10, 11) for being disposed on the dental arches of the lower and upper jaws of the subject and connected by connecting members (20) disposed in an occlusal position, between the cap splints, each connecting member including posterior (21) and anterior (22) end parts made integral with each other and hinged to a respective occlusal face (100, 110) of the upper and lower cap splints, so as to bias said lower cap splint towards a forward direction,
such that each connecting member (20) consists of a rigid connecting rod having a fixed length, the posterior end part (21) of which is on the upper cap splint (10), said posterior end part (21) including a head (210) translationally movably mounted in a longitudinal guide rail (14) partially anchored to the occlusal face (100) of the upper cap splint (10), until it comes in contact against a setting stop (15) housed inside said guide rail, so that the position of said posterior end part (21) in said guide rail can be set as a function of the position of said setting stop, whereby the position of the posterior end part (21) of each rigid connecting rod can be longitudinally set in the occlusal plane so as to adjust the position of the lower cap splint (11).

2. The device according to claim 1, **characterised in that** said guide rail (14) includes a setting screw (15) engaged into an axial threaded bore formed at a posterior end of said guide rail, the anterior end of said setting screw (15) constituting said setting stop for said posterior end part (21) of said connecting rod (20) mounted in said guide rail.

3. The device according to claim 2, **characterised in that** the device comprising a set of setting screws comprising at least two setting screws having different lengths.

4. The device according to any of claims 1 to 3, **characterised in that** said guide rail (14) extends over a length substantially vertically aligned with the occlusal face of the molar teeth.

5. The device according to any of claims 1 to 4, **characterised in that** the lower cap splint (11) includes a recess formed in said occlusal face of said lower cap splint, having a complementary shape to that of said guide rail (14) and for receiving a projecting part of said guide rail.

6. The device according to any of claims 1 to 5, **characterised in that** said head (210) of said posterior end part (21) of said connecting rod is of a ball joint shape.

7. The device according to any of the preceding claims, **characterised in that** said anterior end part (22) of the connecting rods (20) includes a removable hinged fastening member (220) on an attachment device (13) disposed at the occlusal face of the lower cap splint (11) .

8. The device according to claim 7, **characterised in that** said attachment device (13) is mounted into a hollow housing (131) formed in the body of the lower cap splint (11) without projecting from said occlusal face.

9. The device according to claim 7 or 8, **characterised in that** said removable hinged fastening member (220) includes a female element and said attachment device (13) constitutes a pivot male element (130) .

10. The device according to claims 8 and 9, **characterised in that** said pivot male element (130) includes a pivot axis transversely arranged in said hollow housing (131) and said female element (220) has a circular profile open to a section for elastically snap-fitting said circular profile to said transverse pivot axis, the open section of the female element being positioned along the axis of the connecting rod (20).
